# EUROPÄISCHE PATENTSCHRIFT

(11) **EP 2 708 792 B1**
(45) Veröffentlichungstag und Bekanntmachung des Hinweises auf die Patenterteilung: **20.07.2016**
(21) Anmeldenummer: 13182160.5
(22) Anmeldetag: 29.08.2013
(51) Int. Cl.: F16M 11/14, F16M 11/20

(54) **Stativkopf**
Tripod head
Tête de trépied

(30) Priorität: 18.09.2012 DE 102012018376; 22.03.2013 DE 102013004952
(43) Veröffentlichungstag der Anmeldung: 19.03.2014
(73) Patentinhaber: CULLMANN GERMANY GmbH, 90579 Langenzenn (DE)
(72) Erfinder:
(74) Vertreter: Louis Pöhlau Lohrentz

(56) Entgegenhaltungen:
- EP-A2- 2 230 437
- TW-U- M 292 644

## Beschreibung

Die Erfindung betrifft einen Stativkopf mit Kugelgelenk, der eine in einem Lagergehäuse verschwenkbar und drehbar gelagerte Gelenkkugel aufweist.

Stativköpfe mit Kugelgelenk werden vorzugsweise für photographische Kameras eingesetzt, um die Lage der Kamera in drei Achsen schwenken zu können und durch Betätigung eines Klemmhebels fixieren zu können. Derartige Stativköpfe sind für weitere optische Geräte, wie Video- und Filmkameras und Fernrohre einsetzbar.

In zunehmendem Maße werden ausgelöst durch die Entwicklung von Digitalkameras photographische Kameras auch als Videokameras eingesetzt, wobei in diesem Fall die freie Verschwenkbarkeit um drei Achsen unerwünscht ist. Video- und Filmkameras werden vorzugsweise nur um zwei Achsen verschwenkt und/oder gedreht. Gleiches gilt für die Herstellung von Panoramaaufnahmen.

Aus der DE 198 39 461 C1 ist ein Stativkopf mit einem Kugelgelenk bekannt, bei dem durch eine Klemmeinrichtung eine der drei Schwenkachsen fixierbar ist. Nachteilig an dieser Lösung ist, dass die Klemmlage bei erhöhtem Kraftaufwand überwindbar ist. Das Überwinden der Klemmlage ist beispielsweise durch hohe Masse des auf den Stativkopf aufgesetzten optischen Gerätes begünstigt.

Aus der EP 2 230 437 ist ein Stativkopf nach dem Oberbegriff des Anspruchs 1 bekannt.

Aufgabe der vorliegenden Erfindung ist es, einen Stativkopf zu schaffen, der den genannten Nachteil nicht aufweist und leicht zu fertigen ist.

Erfindungsgemäß wird diese Aufgabe mit dem Gegenstand des Anspruchs 1 gelöst. Es wird ein Stativkopf vorgeschlagen mit einem Kugelgelenk, das eine Gelenkkugel und eine in einem Stativkopfgehäuse angeordnete Gelenkpfanne umfasst, wobei an einem Pol der Gelenkkugel ein Anschlussstück mit einem Befestigungsgewinde angeordnet ist und an dem der Gelenkkugel abgewandten Bodenabschnitt ein Stativgewinde vorgesehen ist, wobei in dem Stativkopf drei Schwenkachsen ein x-y-z-Koordinatensystem bilden, dessen Mittelpunkt mit dem Mittelpunkt der hohlkugelförmigen Innenwand der Gelenkpfanne zusammenfällt und dessen y-Achse mit der Längsachse des Stativgewindes fluchtet, wobei vorgesehen ist, dass in dem Stativkopfgehäuse in der x-z-Ebene eine schaltbare Sperreinrichtung angeordnet ist, die aus einer Freigabestellung in eine Sperrstellung schaltbar ist und die in der Sperrstellung in eine am Äquator der Gelenkkugel angeordnete Sperrausnehmung eingreift, wobei die Sperreinrichtung einen mit einer Feder beaufschlagten Sperrstift und eine formschlüssige und/oder reibschlüssige Schalteinrichtung mit einer Betätigungshandhabe umfasst.

Dadurch, dass die Sperreinrichtung formschlüssig in die Sperrausnehmung der Gelenkkugel eingreift, ist die Klemmlage der Gelenkkugel durch Kraftaufwand nicht überwindbar. Auch ein optisches Gerät mit hoher Masse, wie beispielsweise eine Spiegelreflexkamera mit aufgesetztem Teleobjektiv vermag die Klemmlage nicht zu beeinflussen. So ist es möglich, die Bewegung der Gelenkkugel um die y-Achse zu sperren, so dass die Gelenkkugel nur noch nach oben und unten neigbar ist.

Es kann vorgesehen sein, dass an dem Äquator der Gelenkkugel nur eine Sperrausnehmung oder zwei einander gegenüberliegende Sperrausnehmungen angeordnet sind. Damit ist es möglich, die Gelenkkugel in zwei um 180° versetzten Drehlagen zu sperren.

Die Sperreinrichtung kann einen mit einer Feder beaufschlagten Sperrstift und eine formschlüssige und/oder reibschlüssige Schalteinrichtung umfassen.

Es kann vorgesehen sein, dass die Feder als Druckfeder ausgebildet zwischen dem Sperrstift und dem Stativkopfgehäuse angeordnet ist, wobei von der Druckfeder auf den Sperrstift eine zur Gelenkkugel gerichtete Federkraft ausgeübt wird. Damit wird erreicht, dass der Sperrstift selbsttätig in die Sperrausnehmung der Gelenkkugel einrastet.

Weiter kann vorgesehen sein, dass die Schalteinrichtung eine mit dem Sperrstift starr verbundene oder mit dem Sperrstift zumindest bewegungsmäßig zusammenwirkende Betätigungshandhabe aufweist, die mit einem gehäusefesten Lager zusammenwirkt unter Ausbildung einer eingekuppelten Stellung und unter Ausbildung einer ausgekuppelten Stellung, wobei in der eingekuppelten Stellung der Sperrstift in die Sperrausnehmung eingreift und in der ausgekuppelten Stellung außer Eingriff der Sperrausnehmung ist.

Weiter kann vorgesehen sein, dass in der eingekuppelten Stellung die Betätigungshandhabe mit dem Lager in formschlüssigem Eingriff ist.

Es kann vorgesehen sein, dass die Betätigungshandhabe eine Sperrausnehmung aufweist, in die der Sperrstift oder ein Sperrabschnitt einer den Sperrstift aufnehmende Aufnahmehülse formschlüssig drehfest in der eingekuppelten Stellung eingreift.

Die Sperrausnehmung und der Sperrstift oder der Sperrabschnitt der Aufnahmehülse können mit komplementärem Querschnitt ausgebildet sein.

Weiter kann vorgesehen sein, dass der Querschnitt der Sperrausnehmung einerseits und der Querschnitt des formschlüssig eingreifenden Stiftes und/oder der den Sperrstift aufnehmenden Aufnahmehülse andererseits als ein regelmäßiges Polygon komplementär ausgebildet sind.

Die Betätigungshandhabe kann als ein Schaltknopf ausgebildet sein, der mit dem der Gelenkkugel abgewandten Endabschnitt des Sperrstifts starr verbunden ist.

Es kann vorgesehen sein, dass die Schalteinrichtung als eine Drehschaltereinrichtung ausgebildet ist, deren Drehachse mit der Längsachse des Sperrstifts fluchtet.

Weiter kann vorgesehen sein, dass die Schalteinrichtung einen am Außenumfang der Aufnahmehülse angeordneten regelmäßig polygonförmigen Sperrabschnitt aufweist, der mit einer in dem Schaltknopf ausgebildeten regelmäßig polygonförmigen Sperrausnehmung zusammenwirkt.

In einer weiteren vorteilhaften Ausbildung kann vorgesehen sein, dass am Außenumfang der Aufnahmehülse ein regelmäßiger sechseckförmiger Sperrabschnitt angeordnet ist, der mit einer in dem Schaltknopf ausgebildeten regelmäßig sechseckförmigen Sperrausnehmung zusammenwirkt.

Die Schalteinrichtung kann auch einen am Außenumfang der Aufnahmehülse angeordneten nockenförmigen Sperrabschnitt aufweisen, der mit einer in dem Schaltknopf ausgebildeten nockenförmigen Sperrausnehmung zusammenwirkt.

Die Sperreinrichtung kann in die Sperrstellung bringbar sein, wenn der Schaltknopf in einer Drehlage ist, in der der Sperrabschnitt in die Sperrausnehmung einführbar ist.

Es kann vorgesehen sein, dass an dem Schaltknopf und an der Aufnahmehülse Markierungen angebracht sind, die in der Sperrstellung der Sperreinrichtung miteinander fluchten.

Weiter kann vorgesehen sein, dass das Stativkopfgehäuse eine halbkreisförmige Gehäuseausnehmung zur Aufnahme des zylinderförmigen Anschlussstücks aufweist, die so angeordnet ist, dass die Längsachse des Anschlussstücks mit der z-Achse fluchtet.

Der Stativkopf kann eine Kugelklemmeinrichtung aufweisen, die so ausgebildet ist, dass die Gelenkkugel in einer Klemmstellung in der Gelenkpfanne reibschlüssig fixiert ist. Die Kugelklemmeinrichtung kann eine geschlitzte Gelenkpfanne, ein geschlitztes Stativkopfgehäuse mit einem gabelförmigen Klemmabschnitt mit einem ersten Klemmarm und einem zweiten Klemmarm, sowie eine mit den Klemmarmen zusammenwirkende Schraubklemme mit einer Klemmschraube und einer als Abschnitt einer Betätigungshandhabe ausgebildeten Klemmmutter umfassen.

Es kann vorgesehen sein, dass die Stativmutter mit einer Stativkopfaufnahme drehstarr verbunden ist, und dass der Stativkopf auf der Stativkopfaufnahme um die y-Achse drehbar gelagert ist. Damit ist es möglich, bei fixierter Gelenkkugel Panoramaaufnahmen durch Drehung des Stativkopfes um die y-Achse herzustellen.

Der Stativkopf kann eine Panoramaklemmeinrichtung aufweisen, die so ausgebildet ist, dass der Stativkopf in einer Klemmstellung auf der Stativkopfaufnahme reibschlüssig fixiert ist.

Es kann vorgesehen sein, dass die Panoramaklemmeinrichtung einen geschlitzten Klemmring, der in dem Stativkopfgehäuse drehstarr gelagert ist und die Stativmutter umgreift, sowie eine mit dem Klemmring zusammenwirkende Schraubklemme mit einer Klemmschraube und einer als Abschnitt einer Betätigungshandhabe ausgebildeten Klemmmutter umfasst, die mittelbar an dem Stativkopfgehäuse abgestützt ist.

Die Erfindung wird nun anhand von Ausführungsbeispielen näher erläutert. Es zeigen
- Fig. 1: ein erstes Ausführungsbeispiel des erfindungsgemäßen Stativkopfes in einer Arbeitsposition mit frei bewegbarem Kugelkopf in perspektivischer Darstellung;
- Fig. 2: den Stativkopf in Fig. 1 in einer Schnittdarstellung;
- Fig. 3: den Stativkopf in Fig. 1 in einer Arbeitsposition, in der eine Schwenkachse gesperrt ist, in perspektivischer Darstellung;
- Fig. 4: den Stativkopf in Fig. 3 in einer Schnittdarstellung;
- Fig. 5a - 5c: Detaildarstellungen eines Schaltknopfes des Stativkopfes in Fig. 1 in unterschiedlichen Arbeitspositionen;
- Fig. 6a - 6c: schematische Schnittdarstellungen von Funktionselementen des Schaltknopfes in Fig. 5a bis 5c;
- Fig. 7: den Stativkopf in Fig. 1 mit aufgesetzter Schnellspannplatte und Schwenkhebel in perspektivischer Darstellung;
- Fig. 8: ein zweites Ausführungsbeispiel des erfindungsgemäßen Stativkopfes in einer Arbeitsposition, in der eine Schwenkachse gesperrt ist, in perspektivischer Darstellung;
- Fig. 9: den Stativkopf in Fig. 8 in einer Schnittdarstellung;
- Fig. 10: den Stativkopf in Fig. 8 in einer Schnittdarstellung entlang einer mit Schnittlinie IX-IX gekennzeichneten horizontalen Schnittebene;
- Fig. 11: den Stativkopf in Fig. 8 entlang einer mit Schnittlinie X-X gekennzeichneten horizontalen Schnittebene;
- Fig. 12a, 12b: Detaildarstellungen eines Schaltknopfes des Stativkopfes in Fig. 8 in unterschiedlichen Arbeitspositionen;
- Fig. 13: eine schematische Schnittdarstellung von Funktionselementen des Schaltknopfes in Fig. 12a und 12b.

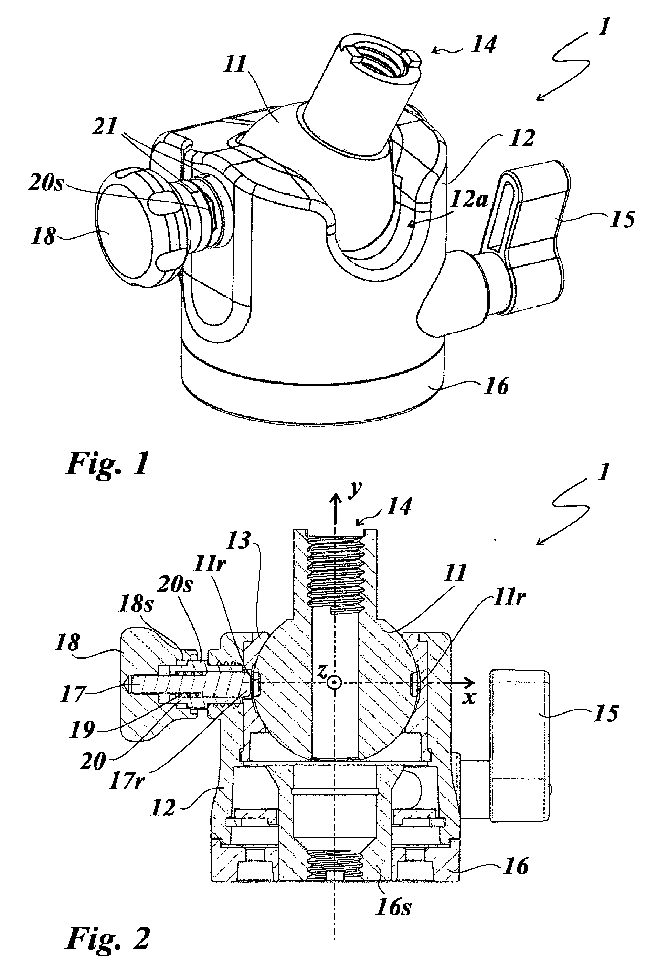

Fig. 1 und 2 zeigen einen Stativkopf 1 mit einem Kugelgelenk, das eine Gelenkkugel 11 und eine in einem Stativkopfgehäuse 12 angeordnete Gelenkpfanne 13 umfasst. Die Gelenkpfanne 13 ist geschlitzt ausgebildet, wie weiter unten näher beschrieben. Die Gelenkkugel 11 ist in der Gelenkpfanne 13 um drei senkrecht aufeinander stehende Achsen x, y, z (siehe Fig. 2) schwenkbar. Dieses x-y-z-Koordinatensystem ist auf die Gelenkpfanne 13 bezogen, wobei der Mittelpunkt der hohlkugelförmigen Innenwand der Gelenkpfanne 13 mit dem Mittelpunkt des x-y-z-Koordinatensystems zusammenfällt.

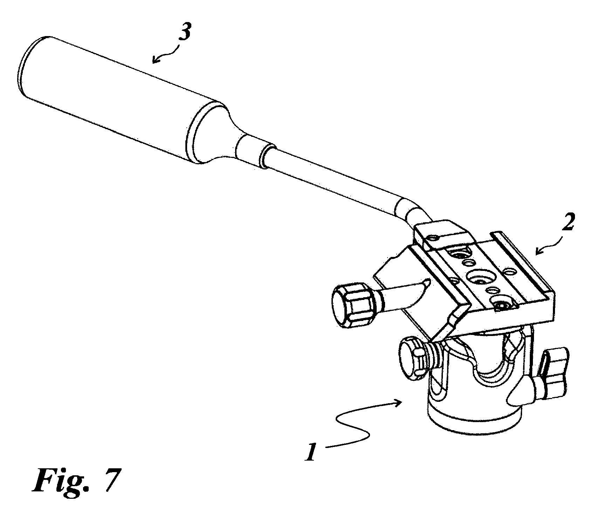

Die Gelenkkugel 11 weist ein zylinderförmiges Anschlussstück 14 mit einem Innengewinde auf, das als Befestigungsgewinde für beispielsweise eine Klemmplatteneinrichtung 2 ausgebildet ist (siehe Fig. 7).

In dem in Fig. 1 und 2 dargestellten Ausführungsbeispiel ist der Stativkopf 1 auf einer Stativkopfaufnahme 16 angeordnet. Die Stativkopfaufnahme 16 weist eine zentrisch angeordnete Stativmutter 16s auf, in die eine Stativschraube eines nicht dargestellten Stativs einschraubbar ist. Die Stativkopfaufnahme 16 und die Stativmutter 16s sind drehstarr miteinander verbunden. Sie können auch einstückig ausgebildet sein. Eine an der Oberseite der Stativkopfaufnahme 16 ausgebildete kreisringförmige Aufnahme bildet mit einem kreisringförmigen Fußabschnitt des Stativkopfes 1 ein Gleitlager, dessen Längsachse mit der Gewindeachse der Stativmutter 16s und der y-Achse fluchtet. Der Stativkopf 1 ist in dem Gleitlager um 360° drehbar.

Die Gelenkkugel 11 weist zwei auf ihrem "Äquator" einander gegenüberliegend angeordnete Sperrausnehmungen 11 r auf. Der Äquator ist der Großkreis der Gelenkkugel 11, dessen Ebene senkrecht auf der Längsachse des zylinderförmigen Anschlussstücks 14 steht. In Fig. 2 ist die Gelenkkugel 11 so ausgerichtet, dass der Äquator in der x-z-Ebene liegt.

Das Stativkopfgehäuse 12 und die Gelenkpfanne 13 sind von einem zylinderförmigen Sperrstift 17 durchgriffen, dessen Längsachse in der x-z-Ebene liegt. Der eine Endabschnitt des Sperrstiftes 17 wirkt mit den Sperrausnehmungen 11 r der Gelenkkugel 11 zusammen, indem er in die zugeordnete Sperrausnehmung 11 r eingreift. Dieser sperrende Endabschnitt des Sperrstifts 17 wird im Folgenden als Rastelement 17r bezeichnet. Der andere Endabschnitt des Sperrstiftes 17 ist mit einem Schaltknopf 18 verbunden. Der dem Schaltknopf 18 zugewandte Abschnitt des Sperrstifts 17 ist mit einem geringeren Durchmesser als der dem Rastelement 17r zugewandte Abschnitt ausgebildet und durchgreift eine als Schraubendruckfeder ausgebildet Druckfeder 19, die an dem Stativkopfgehäuse 12 abgestützt ist.

Der Sperrstift 17 ist in einer aus dem Stativkopfgehäuse 12 hervorragenden zylinderförmigen Aufnahmehülse 20 angeordnet, die an ihrem Außenumfang einen sechseckförmigen Sperrabschnitt 20s aufweist, der mit einer in dem Schaltknopf 18 ausgebildeten sechseckförmigen Sperrausnehmung 18s zusammenwirkt. Die Konturen des Sperrabschnitts 20s und der Sperrausnehmung 18s sind in dem dargestellten Ausführungsbeispiel als gleichmäßige Sechsecke ausgebildet. Andere Konturen sind in abgewandelten Ausführungsbeispielen möglich.

In der in Fig. 1 und 2 dargestellten Freigabestellung sind der Schaltknopf 18 und der Sperrstift 17 gegen den Widerstand der Druckfeder 19 gegenüber der Aufnahmehülse 20 in eine Freigabestellung zurückgezogen. In der Freigabestellung ist der Sperrstift 17 nicht im Eingriff mit den Sperrausnehmungen 11 r der Gelenkkugel 11. Die Gelenkkugel 11 ist folglich in der Gelenkpfanne 13 in allen drei Achsen frei schwenkbar. Der Schaltknopf 18 und der Sperrstift 17 sind in der Freigabestellung fixiert, wenn der Schaltknopf 18 in eine Drehlage gebracht ist, in der der Sperrabschnitt 20s nicht in die Sperrausnehmung 18s eingreifen kann.

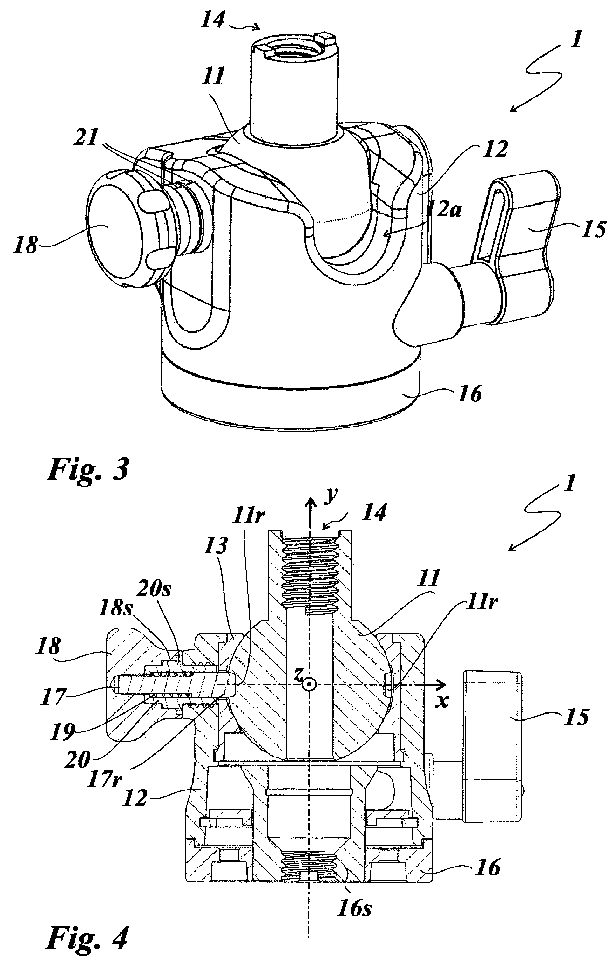

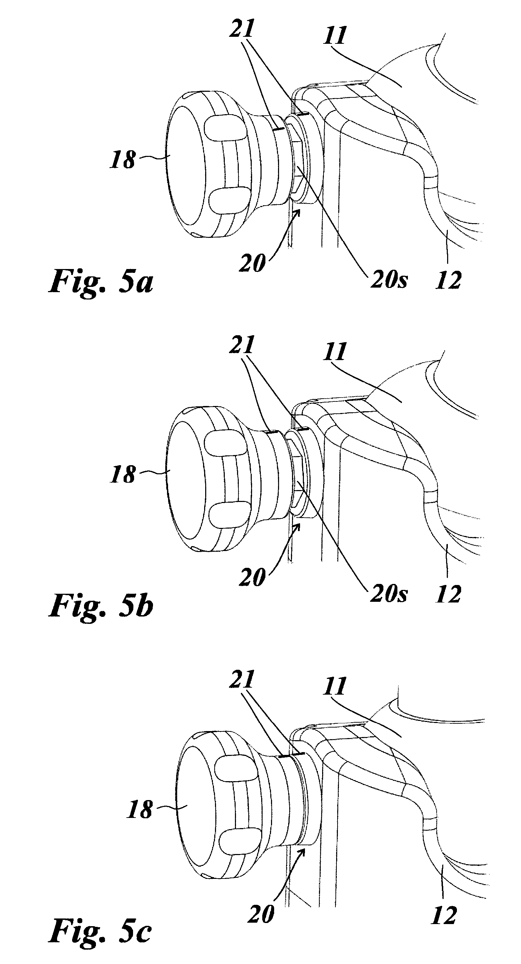

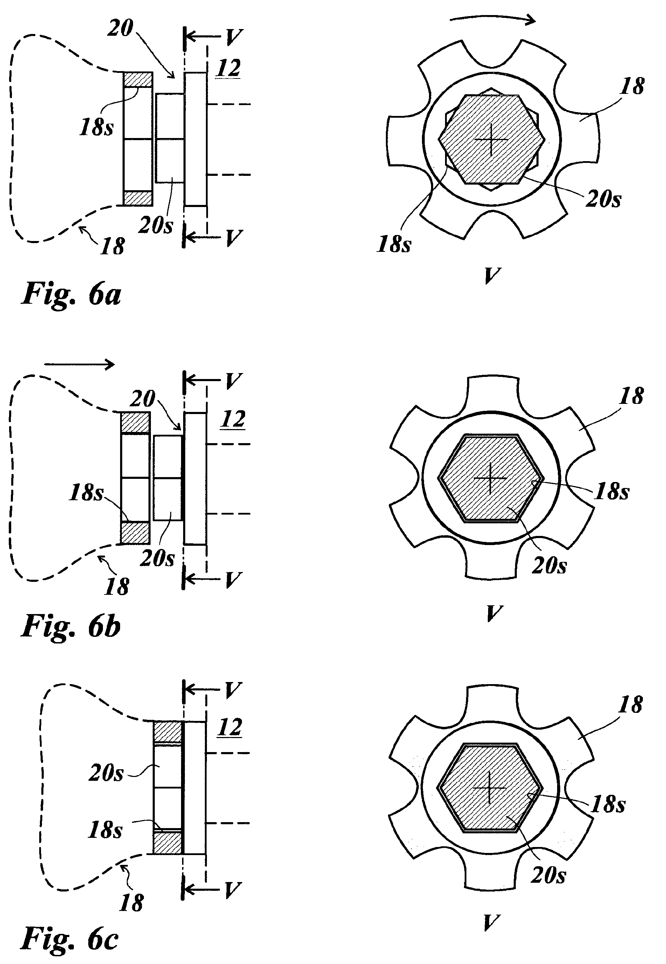

Die Schwenkung der Gelenkkugel 11 um die y- und die z-Achse ist gesperrt, wenn der Schaltknopf 18 in eine Drehlage gebracht ist, in der die Sperrausnehmung 18s den Sperrabschnitt 20s übergreift (siehe Fig. 4 und Fig. 6c). Wegen der Ausbildung der Sperrkonturen als gleichförmige Sechsecke weist der Schaltknopf 18 sechs um jeweils 60° versetzte Freigabestellungen auf. Zur Bedienungserleichterung sind sowohl an dem Schaltknopf 18 als auch an der Aufnahmehülse 20 Markierungen 21 angebracht, die in der Sperrstellung des Schaltknopfes 18 einander gegenüberstehen (siehe Fig. 5a bis 5c).

Sobald der Schaltknopf 18 die Sperrstellung einnimmt, ist das Rastelement 17r des Sperrstifts 17 in Kontakt mit der Oberfläche der Gelenkkugel 11. Sobald die Gelenkkugel 11 eine Lage einnimmt, in der eine der beiden Sperrausnehmungen 11r dem Rastelement 17r gegenübersteht, fällt der Sperrstift 17 in die Sperrausnehmung 11 r ein, wodurch der Sperrstift 17 in eine Sperrstellung gelangt. Die Schwenkung bzw. Drehung der Gelenkkugel 11 um die z-Achse sowie um die y-Achse ist in der Sperrstellung des Sperrstifts 17 nicht mehr möglich. Die Gelenkkugel 11 ist damit nur noch um die x-Achse schwenkbar (siehe Fig. 3 und 4).

Um das Einrasten des Sperrstifts 17 zu erleichtern, weist das Stativkopfgehäuse 12 eine halbkreisförmige Gehäuseausnehmung 12a zur Aufnahme des zylinderförmigen Anschlussstücks 14 auf, die so angeordnet ist, dass bei Schwenkung der Gelenkkugel in die Anschlagstellung in der Gehäuseausnehmung die Längsachse des Anschlussstücks 14 mit der z-Achse fluchtet. Der Äquator der Gelenkkugel 11 liegt nun in der x-y-Ebene. Durch Drehen der Gelenkkugel 11 um die Längsachse des Anschlussstücks 14 kann nun eine der beiden Sperrausnehmungen 11 r dem Sperrstift 17 gegenüber gestellt werden, so dass der Sperrstift 17 einrastet.

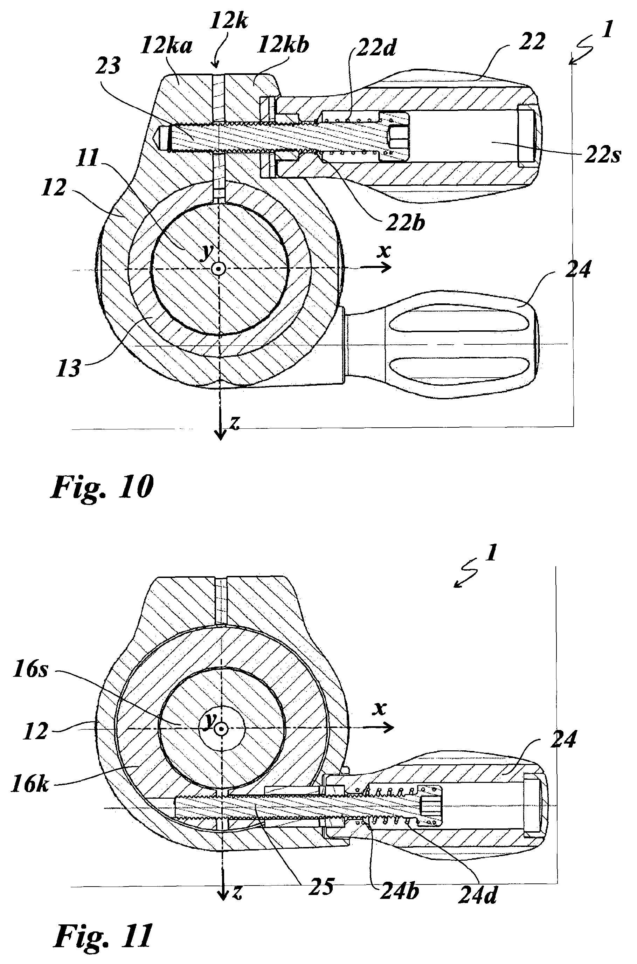

Durch Betätigen eines Klemmhebels 15 einer Kugelklemmeinrichtung kann die Gelenkkugel 11 schließlich in allen drei Achsen fixiert werden. Der Klemmhebel 15 weist einen zylinderförmigen Schaft und einen von diesem radial abstehenden Hebelabschnitt auf. Der Aufbau und die Wirkungsweise der Kugelklemmeinrichtung sind weiter unten in Fig. 10 beschrieben, wobei dort an Stelle des Klemmhebels 15 eine drehknopfförmige Handhabe vorgesehen ist.

Wegen des zwischen dem Stativkopfgehäuse 12 und der Stativkopfaufnahme 16 ausgebildeten Drehgelenks ist der Stativkopf 1 jedoch auch nach dem Betätigen des Klemmhebels 15 nach wie vor um die y-Achse drehbar, beispielsweise um ein Panorama aufzunehmen.

In Fig. 5a und 6a ist der Schaltknopf 18 in der Freigabestellung, in der die beiden Markierungen 21 nicht miteinander fluchten (Fig. 5a). Die Sperrausnehmung 18s und der Sperrabschnitt 20s nehmen gegeneinander versetzte Drehstellungen ein, wie insbesondere in der Teilansicht V in Fig. 6a deutlich wird.

In Fig. 5b und 6b ist der Schaltknopf 18 in der Sperrstellung, in der die beiden Markierungen 21 miteinander fluchten (Fig. 5b). Die Sperrausnehmung 18s und der Sperrabschnitt 20s nehmen korrespondiere Drehstellungen ein, wie insbesondere in der Teilansicht V in Fig. 6b deutlich wird. Zum besseren Verständnis ist ein deutlicher Abstand zwischen der Außenkontur des Sperrabschnitts 20s und der Innenkontur der Sperrausnehmung 18s dargestellt.

In Fig. 5c und 6c ist der Schaltknopf 18 in der Sperrstellung, in der die beiden Markierungen 21 miteinander fluchten (Fig. 5c). Die Sperrausnehmung 18s übergreift nun den Sperrabschnitt 20s, weil der Sperrstift 17 in seine Sperrstellung gelangt ist, wie weiter oben beschrieben.

Fig. 7 zeigt beispielhaft den Stativkopf 1 mit aufgesetzter Klemmplatteneinrichtung 2 und einem an der Klemmplatteneinrichtung 2 angeordneten Schwenkarm 3.

In dem vorbeschriebenen Ausführungsbeispiel weist die Gelenkkugel 11 zwei einander gegenüberliegende Sperrausnehmungen 11 r auf, so dass die Gelenkkugel 11 in jeweils um 180° versetzten Drehstellungen sperrbar ist. Es kann aber auch nur eine Sperrausnehmung 11 r vorgesehen sein.

Weiter kann die Sperrausnehmung 11r als eine rillenförmige Ausnehmung ausgebildet sein, so dass die Gelenkkugel 11 auch in der in Fig. 3 und 4 dargestellten Sperrstellung noch um die Längsachse des Anschlussstücks 14 schwenkbar ist. Für Panoramaaufnahmen wäre diese Ausführung nicht geeignet, könnte jedoch bei Videoaufnahmen Spezialeffekte ermöglichen.

Die rillenförmige Ausnehmung kann ringförmig äquatorial die Gelenkkugel vollständig umlaufend ausgebildet sein. Es kann aber auch vorgesehen sein, die rillenförmige Ausnehmung nicht vollständig umlaufend auszubilden und in dem Unterbrechungsraum eine Sperrausnehmung 11r anzuordnen, so dass einerseits Spezialeffekte möglich sind und andererseits die weiter oben beschriebene exakte Schenkbewegung um eine Achse möglich ist.

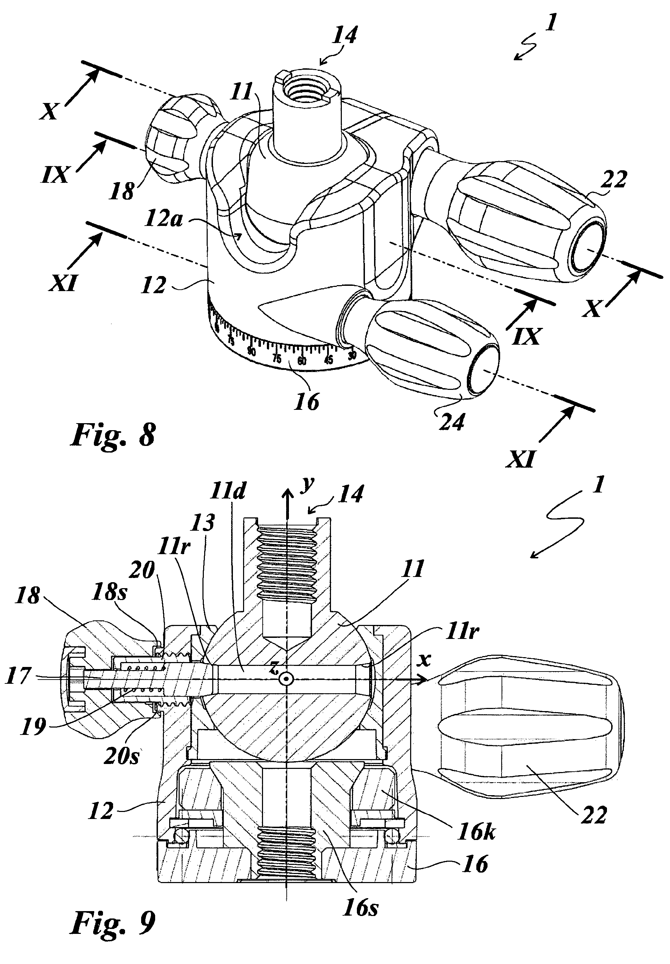

Die Figuren 8 bis 13 zeigen ein zweites Ausführungsbeispiel des erfindungsgemäßen Stativkopfes.

Ein Stativkopf 1 ist prinzipiell wie der in Fig. 1 bis 6 beschriebene Stativkopf ausgebildet.

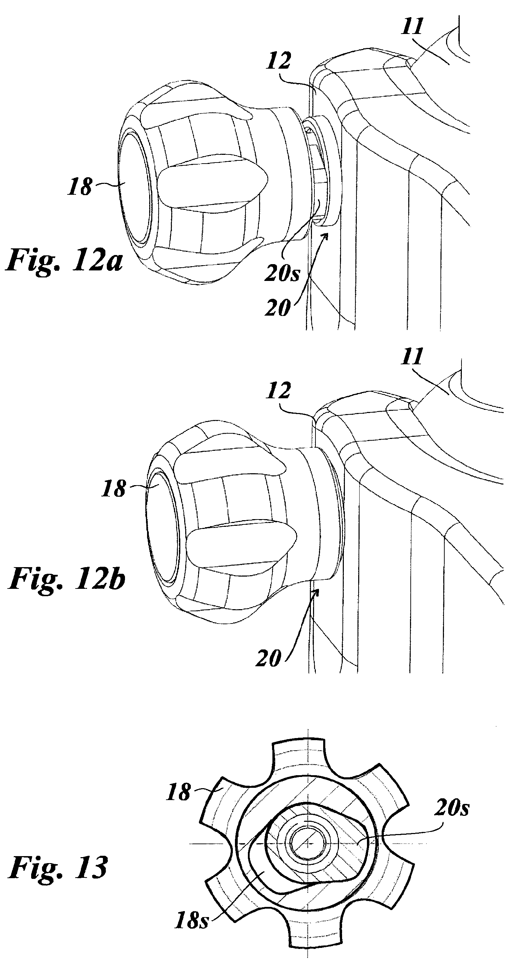

Der an dem Außenumfang der den Sperrstift 17 aufnehmenden Aufnahmehülse 20 angeordnete Sperrabschnitt 20s ist als ein nockenförmiger Sperrabschnitt ausgebildet, der mit einer in dem Schaltknopf 18 ausgebildeten nockenförmigen Sperrausnehmung 18s zusammenwirkt (siehe Fig. 13). Zwischen den Konturen des Sperrabschnitts 20s und der Sperrausnehmung 18s ist ein Abstandsraum ausgebildet, der beispielsweise als eine Spielpassung ausgebildet sein kann. In Fig. 13 ist der Sperrabschnitt 20s außerhalb der Sperrausnehmung 18s, wobei der Schaltknopf 18 in einer Freigabestellung ist, wie in Fig. 12a gezeigt. Im Unterschied zu dem in Fig. 1 bis 6 dargestellten ersten Ausführungsbeispiel gibt es nur eine Sperrstellung (siehe Fig. 12b). In der Sperrstellung greift der Sperrabschnitt 20s formschlüssig drehfest in den komplementären Querschnitt der Sperrausnehmung 18s ein.

Das Drehlager zwischen der Stativkopfaufnahme 16 und dem Stativkopf 1 ist als ein Kugellager ausgebildet.

Anstelle des in Fig. 1 und 2 vorgesehenen Klemmhebels 15 ist in den Fig. 8 bis 13 als Handhabe der Kugelklemmeinrichtung zur Fixierung der Gelenkkugel 11 in der Gelenkpfanne 13 ein als Drehknopf ausgebildeter Kugelklemmgriff 22 vorgesehen.

Das Stativkopfgehäuse 12 weist, wie Fig. 10 zeigt, einen hervorspringenden gabelförmigen Klemmabschnitt 12k mit einem durchgehenden Schlitz auf, der einen ersten Klemmarm 12ka und einen zweiten Klemmarm 12kb voneinander trennt. Der erste Klemmarm 12ka weist ein Gewindesackloch auf, in das eine Klemmschraube 23 eingeschraubt ist. Der zweite Klemmarm 12kb weist ein Durchgangsloch auf, das mit einem größeren Durchmesser als der Gewindedurchmesser der Klemmschraube 23 ausgebildet ist.

Der Kugelklemmgriff 22 weist ein kopfseitiges axiales Sackloch 22s und ein fußseitiges axiales Sackloch auf, die durch einen Zwischenboden 22b voneinander getrennt sind. Der Durchmesser des kopfseitigen Sacklochs 22s ist größer als der Kopfdurchmesser der Klemmschraube 23. Der Zwischenboden 22b weist ein axiales Gewindeloch auf, dessen Gewindedurchmesser dem Gewindedurchmesser der Klemmschraube 23 entspricht. Der Kugelklemmgriff 22 wirkt so als eine Klemmmutter.

Die Klemmschraube 23 kann über das kopfseitige Sackloch 22s des Kugelklemmgriffs 22 in das Gewindeloch im Zwischenboden 22b eingeschraubt werden und sodann in das Gewindesackloch des ersten Klemmarms 12ka des Stativkopfgehäuses 12 eingeschraubt werden. Die Öffnung im Kopf des Kugelklemmgriffs 22 ist durch eine Abdeckkappe verschließbar. Zwischen dem Kopf der Klemmschraube 23 und dem Zwischenboden 22b ist eine Schraubendruckfeder 22d angeordnet, die verhindert, dass der Kugelklemmgriff 22 nach dem Lösen der Klemmung auf der Klemmschraube 23 "klappert".

Der Kugelklemmgriff 22 ist nach dem beschriebenen Montageschritt auf die Klemmschraube 23 so weit aufgeschraubt, dass die ringförmige Stirnfläche des Kugelklemmgriffs 22s an einer an dem zweiten Klemmarm 12kb des Stativkopfgehäuses 12 ausgebildeten Anschlagfläche unmittelbar bzw. mittelbar anliegt. Beim weiteren Drehen des Kugelklemmgriffs 22 werden die beiden Klemmarme 12ka, 12kb des Stativkopfgehäuses 12 zusammengepresst, wodurch das Stativkopfgehäuse 12 und die in dem Stativkopfgehäuse angeordnete geschlitzte Gelenkpfanne 13 elastisch verformt werden. Die Innenseite der Gelenkpfanne 13 wird auf die Oberfläche der Gelenkkugel 11 gepresst und die Gelenkkugel 11 durch Reibschluss in der Gelenkpfanne 13 fixiert.

Der Stativkopf 1 weist zusätzlich zu der vorbeschriebenen Kugelklemmeinrichtung eine mit einem Panoramaklemmgriff 24 betätigbare Panoramaklemmeinrichtung auf, welche die Drehung des auf der Stativkopfaufnahme 16 gelagerten Stativkopfes 1 um die y-Achse sperrt.

Die Panoramaklemmeinrichtung ist wie die Kugelklemmeinrichtung aufgebaut, mit dem Unterschied, dass beim Klemmen ein in dem Stativkopfgehäuse 12 angeordneter geschlitzter Klemmring 16k zusammengepresst wird, der drehstarr mit dem Stativkopfgehäuse 12 verbunden ist. Der Klemmring 16k umgreift die zylinderförmige Stativmutter 16s. Der Klemmring 16k weist analog zu dem Stativkopfgehäuse 12 ein Gewindeloch für eine Klemmschraube 25 und ein von der Klemmschraube 25 durchgriffenes Durchgangsloch auf, weist jedoch keinen hervorspringenden gabelförmigen Klemmabschnitt auf. Vielmehr liegen die Längsachsen der beiden Löcher auf einer Sehne des Klemmrings 16k.

Der Panoramaklemmgriff 24 ist wie der Kugelklemmgriff 25 aufgebaut und weist ein kopfseitiges axiales Sackloch 24s und ein fußseitiges axiales Sackloch auf, die durch einen Zwischenboden 24b voneinander getrennt sind. In analoger Weise ist eine Druckfeder 24d zwischen dem Kopf der Klemmschraube 25 und dem Zwischenboden 24b angeordnet.

Durch diesen konstruktiven Aufbau ist der Klemmring 16k drehstarr in dem Stativkopfgehäuse 12 angeordnet.

Durch Anziehen des Panoramaklemmgriffs 24, wie weiter oben für den Kugelklemmgriff beschrieben, wird die Innenseite des Klemmrings 16k auf die Oberfläche der Stativmutter 16s gepresst und es wird die Drehbewegung des Stativkopfes 1 um die y-Achse, welche die Aufnahme eines Panoramas ermöglicht, gesperrt. Zur Panoramafunktion ist vorgesehen, dass der Panoramaklemmgriff 24 geöffnet und aber der Klemmgriff 22 angezogen ist.

Die Stativkopfaufnahme weist an ihrem Außenumfang eine Gradteilung auf, welche das definierte Schwenken um die y-Achse bei Panoramaaufnahmen erleichtert. In dem in Fig. 8 dargestellten Ausführungsbeispiel handelt es sich um eine 360°-Teilung.

### Bezugszeichenliste

- 1: Stativkopf
- 2: Klemmplatteneinrichtung
- 3: Schwenkarm
- 11: Gelenkkugel
- 11d: Durchgangsloch
- 11r: Sperrausnehmung
- 12: Stativkopfgehäuse
- 12a: Gehäuseausnehmung
- 12k: Klemmabschnitt
- 12ka: erster Klemmarm
- 12kb: zweiter Klemmarm
- 13: Gelenkpfanne
- 14: Anschlussstück
- 15: Klemmhebel
- 16: Stativkopfaufnahme
- 16k: Klemmring
- 16s: Stativmutter
- 17: Sperrstift
- 17r: Rastelement
- 18: Schaltknopf
- 18s: Sperrausnehmung
- 19: Druckfeder
- 20: Aufnahmehülse
- 20s: Sperrabschnitt
- 21: Markierung
- 22: Kugelklemmgriff
- 22b: Zwischenboden
- 22d: Druckfeder
- 22s: kopfseitiges Sackloch
- 23: Klemmschraube
- 24: Panoramaklemmgriff
- 24b: Bodenabschnitt
- 24d: Druckfeder
- 24s: Sackloch
- 25: Klemmschraube

## Patentansprüche

1. Stativkopf (1) mit einem Kugelgelenk, das eine Gelenkkugel (11) und eine in einem Stativkopfgehäuse (12) angeordnete Gelenkpfanne (13) umfasst, wobei an einem Pol der Gelenkkugel (11) ein Anschlussstück (14) mit einem Befestigungsgewinde angeordnet ist und an dem der Gelenkkugel (11) abgewandten Bodenabschnitt ein Stativgewinde (16s) vorgesehen ist,
wobei in dem Stativkopf (1) drei Schwenkachsen ein x-y-z-Koordinatensystem bilden, dessen Mittelpunkt mit dem Mittelpunkt der hohlkugelförmigen Innenwand der Gelenkpfanne (13) zusammenfällt und dessen y-Achse mit der Längsachse des Stativgewindes (16s) fluchtet, dass in dem Stativkopfgehäuse (12) in der x-z-Ebene eine schaltbare Sperreinrichtung angeordnet ist, die aus einer Freigabestellung in eine Sperrstellung schaltbar ist und die in der Sperrstellung in eine am Äquator der Gelenkkugel (11) angeordnete Sperrausnehmung (11 r) eingreift,
wobei die Sperreinrichtung einen mit einer Feder (19) beaufschlagten Sperrstift (17) und eine formschlüssige und/oder reibschlüssige Schalteinrichtung mit einer Betätigungshandhabe umfasst,
**dadurch gekennzeichnet,**
**dass** der Sperrstift (17) das Stativkopfgehäuse und die Gelenkpfanne durchgreift und seine Längsachse in der x-z-Ebene liegt,sodass der Sperrstift (17) in Sperrstellung die Bewegung der Gelenkkugel (11) um die z-Achse und die y-Achse sperrt, sodass die Gelenkkugel (11) nur noch um die x-Achse schwenkbar ist.

2. Stativkopf nach Anspruch 1,
**dadurch gekennzeichnet,**
**dass** an dem Äquator der Gelenkkugel (11) nur eine Sperrausnehmung (11 r) oder zwei einander gegenüberliegende Sperrausnehmungen (11 r) angeordnet sind.

3. Stativkopf nach Anspruch 1 oder 2,
**dadurch gekennzeichnet,**
**dass** die Feder als Druckfeder (19) ausgebildet zwischen dem Sperrstift (17) und dem Stativkopfgehäuse (12) angeordnet ist, wobei von der Druckfeder(19) auf den Sperrstift (17) eine zur Gelenkkugel (11) gerichtete Federkraft ausgeübt wird.

4. Stativkopf nach einem der vorangehenden Ansprüche,
**dadurch gekennzeichnet,**
**dass** die Betätigungshandhabe der Schalteinrichtung mit dem Sperrstift (17) starr verbunden ist oder mit dem Sperrstift (17) zumindest bewegungsmäßig zusammenwirkt, wobei die Betätigungshandhabe mit einem gehäusefesten Lager zusammenwirkt unter Ausbildung einer eingekuppelten Stellung und unter Ausbildung einer ausgekuppelten Stellung, wobei in der eingekuppelten Stellung der Sperrstift (17) in die Sperrausnehmung (11 r) eingreift und in der ausgekuppelten Stellung außer Eingriff der Sperrausnehmung ist.

5. Stativkopf nach Anspruch 4,
**dadurch gekennzeichnet,**
**dass** in der eingekuppelten Stellung die Betätigungshandhabe mit dem Lager in formschlüssigem Eingriff ist.

6. Stativkopf nach einem der vorangehenden Ansprüche,
**dadurch gekennzeichnet,**
**dass** die Betätigungshandhabe eine Sperrausnehmung (18s) aufweist, in die der Sperrstift (17) oder ein Sperrabschnitt (20s) einer den Sperrstift (17) aufnehmende Aufnahmehülse (20) formschlüssig drehfest in der eingekuppelten Stellung eingreift.

7. Stativkopf nach Anspruch 6,
**dadurch gekennzeichnet,**
**dass** die Sperrausnehmung (18s) und der Sperrstift (17) oder der Sperrabschnitt (20s) der Aufnahmehülse (20) mit komplementärem Querschnitt ausgebildet sind.

8. Stativkopf nach einem der vorangehenden Ansprüche,
**dadurch gekennzeichnet,**
**dass** die Betätigungshandhabe als ein Schaltknopf (18) ausgebildet ist, der mit dem der Gelenkkugel (11) abgewandten Endabschnitt des Sperrstifts (17) starr verbunden ist.

9. Stativkopf nach einem der vorangehenden Ansprüche,
**dadurch gekennzeichnet,**
**dass** die Schalteinrichtung als eine Drehschaltereinrichtung ausgebildet ist, deren Drehachse mit der Längsachse des Sperrstifts (17) fluchtet.

10. Stativkopf nach Anspruch 6,
**dadurch gekennzeichnet,**
**dass** die Sperreinrichtung (17) in die Sperrstellung bringbar ist, wenn der Schaltknopf (18) in einer Drehlage ist, in der der Sperrabschnitt (20s) in die Sperrausnehmung (18s) einführbar ist.

11. Stativkopf nach einem der vorangehenden Ansprüche,
**dadurch gekennzeichnet,**
**dass** das Stativkopfgehäuse (12) eine halbkreisförmige Gehäuseausnehmung (12a) zur Aufnahme des zylinderförmigen Anschlussstücks (14) aufweist, die so angeordnet ist, dass die Längsachse des Anschlussstücks (14) mit der z-Achse fluchtet.

12. Stativkopf nach einem der vorangehenden Ansprüche,
**dadurch gekennzeichnet,**
**dass** eine Stativmutter (16s) mit einer Stativkopfaufnahme (16) drehstarr verbunden ist, und
**dass** der Stativkopf (1) auf der Stativkopfaufnahme (16) um die y-Achse drehbar gelagert ist.

13. Stativkopf nach Anspruch 12,
**dadurch gekennzeichnet,**
**dass** der Stativkopf (1) eine Panoramaklemmeinrichtung aufweist, die so ausgebildet ist, dass der Stativkopf in einer Klemmstellung auf der Stativkopfaufnahme (16) reibschlüssig fixiert ist.

14. Stativkopf nach Anspruch 13,
**dadurch gekennzeichnet,**
**dass** die Panoramaklemmeinrichtung einen geschlitzten Klemmring (16k), der in dem Stativkopfgehäuse (12) drehstarr gelagert ist und die Stativmutter (16s) umgreift, sowie eine mit dem Klemmring (16k) zusammenwirkende Schraubklemme mit einer Klemmschraube (25) und einer als Abschnitt (24b) einer Betätigungshandhabe (24) ausgebildeten Klemmmutter umfasst, die mittelbar an dem Stativkopfgehäuse (12) abgestützt ist.

## Claims

1. Tripod head (1) having a ball joint which comprises a joint ball (11) and a joint socket (13) arranged in a tripod head housing (12), wherein a connection piece (14) having a fastening thread is arranged on a pole of the joint ball (11) and a tripod thread (16s) is provided on the base section facing away from the joint ball (11), wherein three pivot axes form an x-y-z coordinate system in the tripod head (1), the centre point of which coincides with the centre point of the hollow ball-shaped inner wall of the joint socket (13), and the y-axis of which aligns with the longitudinal axis of the tripod thread (16s),
a switchable blocking device is arranged in the tripod head housing (12) in the x-z plane, said blocking device being switchable from a release position into a blocking position and engaging with a blocking recess (11r) arranged on the equator of the joint ball (11) in the blocking position,
wherein the blocking device comprises a blocking pin (17) impinged with a spring (19) and a positive and/or friction-fit switching device having an actuation handle, **characterised in that**
the blocking pin (17) penetrates the tripod head housing and the joint socket and its longitudinal axis lies in the x-z plane, such that the blocking pin (17) blocks the movement of the joint ball (11) around the z-axis and the y-axis in the blocking position, such that the joint ball (11) is only able to pivot around the x-axis.

2. Tripod head according to claim 1,
**characterised in that**
only one blocking recess (11r) or two blocking recesses (11r) lying opposite each other are arranged on the equator of the joint ball (11).

3. Tripod head according to claim 1 or 2,
**characterised in that**
the spring, formed as a compression spring (19), is arranged between the blocking pin (17) and the tripod head housing (12), wherein a spring force directed towards the joint ball (11) is exerted by the compression spring (19) onto the blocking pin (17).

4. Tripod head according to one of the preceding claims, **characterised in that**
the actuation handle of the switching device is connected rigidly to the blocking pin (17) or interacts with the blocking pin (17) at least in terms of movement, wherein the actuation handle interacts with a bearing which is fixed relative to the housing, forming an engaged position and forming a disengaged position, wherein, in the engaged position, the blocking pin (17) engages with the blocking recess (11r) and, in the disengaged position, is not engaged with the blocking recess.

5. Tripod head according to claim 4,
**characterised in that**
the actuation handle engages positively with the bearing in the engaged position.

6. Tripod head according to one of the preceding claims,
**characterised in that**
the actuation handle has a blocking recess (18s) with which the blocking pin (17) or a blocking section (20s) of a receiving sleeve (20) receiving the blocking pin (17) engages positively and non-rotatably in the engaged position.

7. Tripod head according to claim 6,
**characterised in that**
the blocking recess (18s) and the blocking pin (17) or the blocking section (20s) of the receiving sleeve (20) are formed with a complementary cross-section.

8. Tripod head according to one of the preceding claims,
**characterised in that**
the actuation handle is formed as a switching button (18) which is connected rigidly to the end section of the blocking pin (17) facing away from the joint ball (11).

9. Tripod head according to one of the preceding claims,
**characterised in that**
the switching device is formed as a rotational switching device, the rotational axis of which aligns with the longitudinal axis of the blocking pin (17).

10. Tripod head according to claim 6,
**characterised in that**
the blocking device (17) is able to be brought into the blocking position if the switching button (18) is in a rotational position in which the blocking section (20s) is able to be introduced into the blocking recess (18s).

11. Tripod head according to one of the preceding claims,
**characterised in that**
the tripod head housing (12) has a semi-circular housing recess (12a) to receive the cylindrical connection piece (14), said housing recess being arranged such that the longitudinal axis of the connection piece (14) aligns with the z-axis.

12. Tripod head according to one of the preceding claims,
**characterised in that**
a tripod nut (16s) is connected rigidly in terms of rotation to a tripod head receiver (16), and
the tripod head (1) is mounted on the tripod head receiver (16) to be rotatable around the y-axis.

13. Tripod head according to claim 12,
**characterised in that**
the tripod head (1) has a panoramic clamping device which is formed in such a way that, in a clamping position, the tripod head is fixed in a friction-fit manner to the tripod head receiver (16).

14. Tripod head according to claim 13,
**characterised in that**
the panoramic clamping device comprises a slotted clamping ring (16k) which is mounted to be rigid in terms of rotation in the tripod head housing (12) and encompasses the tripod nut (16s), as well as a screw terminal, interacting with the clamping ring (16k), having a clamping screw (25) and a clamping nut formed as a section (24b) of an actuation handle (24), said clamping nut being supported indirectly on the tripod head housing (12).

## Revendications

1. Tête de trépied (1) avec une articulation à rotule qui comprend une rotule d'articulation (11) et un coussinet d'articulation (13) disposé dans un carter de tête de trépied (12), une pièce de connexion (14) avec un filetage de fixation étant disposée sur un pôle de la rotule d'articulation (11), et un filetage de trépied (16s) étant prévu sur le tronçon de fond éloigné de la rotule d'articulation (11),
trois axes de pivotement formant dans la tête de trépied (1) un système de coordonnées x-y-z dont le point central coïncide avec le point central de la paroi intérieure en forme de sphère creuse du coussinet d'articulation (13), et dont l'axe y affleure l'axe longitudinal du filetage de trépied (16s), un dispositif de blocage commutable étant disposé dans le carter de tête de trépied (12) dans le plan x-z et étant commutable à partir d'une position de libération vers une position de blocage et, dans la position de blocage, engrenant dans un creux de blocage (11 r) disposé sur l'équateur de la rotule d'articulation (11),
le dispositif de blocage comprenant une broche de blocage (17) soumise à un ressort (19) et un dispositif de commutation à liaison de forme et/ou à liaison de friction, avec une poignée d'actionnement,
**caractérisée en ce que**
la broche de blocage (17) traverse le carter de tête de trépied et le coussinet d'articulation, et son axe longitudinal est situé dans le plan x-z, de telle sorte que la broche de blocage (17), dans la position de blocage, bloque le mouvement de la rotule d'articulation (11) autour de l'axe z et de l'axe y, de telle sorte que la rotule d'articulation (11) ne peut plus pivoter qu'autour de l'axe x.

2. Tête de trépied selon la revendication 1,
**caractérisée en ce que**
seul un creux de blocage (11 r) ou deux creux de blocage (11 r) opposés l'un à l'autre sont disposés sur l'équateur de la rotule d'articulation (11).

3. Tête de trépied selon la revendication 1 ou 2,
**caractérisée en ce que**
le ressort, constitué en tant que ressort de compression (19), est disposé entre la broche de blocage (17) et le carter de tête de trépied (12), une force de ressort dirigée vers la rotule d'articulation (11) étant exercée par le ressort de compression (19) sur la broche de blocage (17).

4. Tête de trépied selon l'une des revendications précédentes,
**caractérisée en ce que**
la poignée d'actionnement du dispositif de commutation est raccordée de façon rigide à la broche de blocage (17) ou coopère avec la broche de blocage (17) au moins en matière de mouvement, la poignée d'actionnement coopérant avec un palier fixe par rapport au carter, avec constitution d'une position accouplée et avec constitution d'une position désaccouplée, la broche de blocage (17) engrenant, dans la position accouplée, dans le creux de blocage (11r) et étant, dans la position désaccouplée, désengagée du creux de blocage (11 r).

5. Tête de trépied selon la revendication 4,
**caractérisée en ce que**,
dans la position accouplée, la poignée d'actionnement est en prise, par liaison de forme, avec le palier.

6. Tête de trépied selon l'une des revendications précédentes,
**caractérisée en ce que**
la poignée d'actionnement présente un creux de blocage (18s) dans lequel la broche de blocage (17) ou un tronçon de blocage (20s) d'une douille de réception (20) recevant la broche de blocage (17) engrène, dans la position accouplée, en étant bloqué(e) en torsion par liaison de forme.

7. Tête de trépied selon la revendication 6,
**caractérisée en ce que**
le creux de blocage (18s) et la broche de blocage (17) ou le tronçon de blocage (20s) de la douille de réception (20) sont constitués avec une section transversale complémentaire.

8. Tête de trépied selon l'une des revendications précédentes,
**caractérisée en ce que**
la poignée d'actionnement est constituée en tant que tête de commutation (18) qui est raccordée de façon rigide avec le tronçon d'extrémité de la broche de blocage (17) qui est éloigné de la rotule d'articulation (11).

9. Tête de trépied selon l'une des revendications précédentes,
**caractérisée en ce que**
le dispositif de commutation est constitué en tant que dispositif de commutateur rotatif dont l'axe de rotation affleure l'axe longitudinal de la broche de blocage (17).

10. Tête de trépied selon la revendication 6,
**caractérisée en ce que**
le dispositif de blocage (17) peut être amené dans la position de blocage quand la tête de commutation (18) est dans une position de rotation dans laquelle le tronçon de blocage (20s) peut être introduit dans le creux de blocage (18s).

11. Tête de trépied selon l'une des revendications précédentes,
**caractérisée en ce que**
le carter de tête de trépied (12) présente un creux de carter (12a) de forme hémisphérique pour la réception de la pièce de connexion (14) de forme cylindrique qui est disposée de telle sorte que l'axe longitudinal de la pièce de connexion (14) affleure l'axe z.

12. Tête de trépied selon l'une des revendications précédentes,
**caractérisée en ce**
**qu'**un écrou de trépied (16s) est raccordé, de façon rigide à la torsion, à un logement de tête de trépied (16), et
en ce que la tête de trépied (1) est supportée sur le logement de tête de trépied (16) de façon à pouvoir tourner autour de l'axe y.

13. Tête de trépied selon la revendication 12,
**caractérisée en ce que**
la tête de trépied (1) présente un dispositif de serrage panoramique qui est constitué de telle sorte que la tête de trépied est fixée par liaison de friction dans une position de serrage sur le logement de tête de trépied (16).

14. Tête de trépied selon la revendication 13,
**caractérisée en ce que**
le dispositif de serrage panoramique comprend une bague de serrage (16k) fendue qui est supportée de façon rigide en torsion dans le carter de tête de trépied (12) et qui enserre l'écrou de trépied (16s), ainsi qu'un crampon à vis, avec une vis de serrage (25), coopérant avec la bague de serrage (16k), et avec un écrou de serrage, constitué en tant que tronçon (24b) d'une poignée d'actionnement (24), qui est appuyé indirectement sur le carter de tête de trépied (12).
